(19) Europäisches Patentamt
European Patent Office
Office européen des brevets

(11) **EP 3 419 096 B1**

(12) **EUROPEAN PATENT SPECIFICATION**

(45) Date of publication and mention
of the grant of the patent:
**23.09.2020 Bulletin 2020/39**

(51) Int Cl.:
*H01M 10/0525* (2010.01)    *H01M 10/0567* (2010.01)
*H01M 10/0568* (2010.01)    *H01M 10/0569* (2010.01)
*H01M 4/02* (2006.01)

(21) Application number: **18179233.4**

(22) Date of filing: **22.06.2018**

(54) **ELECTROLYTE AND AND LITHIUM-ION BATTERY**

ELEKTROLYT UND LITHIUM-IONEN-BATTERIE

ÉLECTROLYTE ET BATTERIE AU LITHIUM-ION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2017 CN 201710485995**

(43) Date of publication of application:
**26.12.2018 Bulletin 2018/52**

(73) Proprietor: **Contemporary Amperex Technology
Co., Limited
Jiaocheng District
Ningde City, Fujian
352100 (CN)**

(72) Inventors:
• **TIAN, Shaojie
Ningde, Fujian 352100 (CN)**
• **HAN, Changlong
Ningde, Fujian 352100 (CN)**

(74) Representative: **Manitz Finsterwald
Patent- und Rechtsanwaltspartnerschaft mbB
Martin-Greif-Strasse 1
80336 München (DE)**

(56) References cited:
EP-A1- 2 887 441       KR-A- 20140 138 078
KR-A- 20170 061 030    US-A1- 2014 272 605
US-A1- 2016 028 115

**Description**

## RELATED APPLICATIONS

The present application claims priority to Chinese patent application No. CN201710485995.9, filed on June 23, 2017.

## FIELD OF THE PRESENT INVENTION

The present invention relates to the field of lithium-ion battery, and particularly relates to an electrolyte and a lithium-ion battery.

## BACKGROUND OF THE PRESENT INVENTION

In recent years, with developments in automotive industry, non-renewable resources are exhausting and atmospheric environment pollution is aggravating, therefore the world has turned its attention to the fields of electric vehicles (EV) and hybrid electric vehicles (HEV) which use clean energy. A lithium-ion battery is referred to as green energy in the 21st century due to advantages such as high capacity, high voltage, high cycle stability, environmental friendliness and the like, and the lithium-ion battery has a prosperous application.

At present, lithium nickel cobalt manganese oxide positive material synthesizes advantages of lithium cobalt oxide, lithium nickel oxide and lithium manganese oxide on energy density, power density, structure stability, consistency of raw material preparation and the like, therefore the cycle life, the rate charge performance and the high temperature performance of the lithium nickel cobalt manganese oxide positive material are all better. Lithium iron phosphate positive material has advantages such as rich raw material resources, low price, environmental friendliness, high safety performance, long operating life and the like. The two above-mentioned positive active materials are both important choices for the power lithium-ion battery.

According to latest national policies, the battery having high energy density has become the trend of the future development, however, existing solutions such as improving the pressing density, improving the specific capacity and the like will deteriorate the cycle performance of the lithium-ion battery, thereby decreasing the operating life of the lithium-ion battery. The ambient temperature in winter is lower, which presents higher requirement on the low-temperature performance of the power lithium-ion battery. A rapid charge speed is also a trend for the future development of the power lithium-ion battery, and the internal resistance of the battery is needed to be decreased so as to improve the rapid charging performance of the power lithium-ion battery. Therefore, comprehensive improvements on the low-temperature performance, the rapid charging performance and the cycle life of the lithium-ion battery have become an urgent matter at the moment.

KR 2017 0061030 A discloses an electrolyte for lithium secondary battery according to the preamble of claim 1.

Generally, the performances of the lithium-ion battery can be improved by adding a SEI-forming additive into the electrolyte, and the SEI-forming additive generally comprises vinylene carbonate, 1,3-propanesultone and the like, however, the above SEI-forming additives make the impedance of the SEI membrane larger, moreover, the electrolyte generally uses carbonates as the organic solvent, and the conductivity of the lithium ions is lower, therefore the comprehensive improvements on the low temperature performance, the rapid charging performance and the cycle life of the lithium-ion battery are difficult to meet. In view of this, the present invention is proposed.

## SUMMARY OF THE PRESENT INVENTION

In view of the problem existing in the background, an object of the present invention is to provide an electrolyte and a lithium-ion battery, the lithium-ion battery has advantages such as excellent low temperature performance, excellent rapid charging performance and long cycle life.

In order to achieve the above object, in a first aspect of the present invention, the present invention provides an electrolyte, which comprises a lithium salt, a non-aqueous organic solvent and an additive, the additive comprises methylene methanedisulfonate or the additive comprises two of methylene methanedisulfonate and ethylene sulfate, the lithium salt comprises lithium bis(fluorosulfonyl)imide, a content of the lithium bis(fluorosulfonyl)imide is 5%~15% of a total weight of the electrolyte.

In a second aspect of the present invention, the present invention provides a lithium-ion battery, which comprises a positive electrode plate, a negative electrode plate, a separator provided between the positive electrode plate and the negative electrode plate and the electrolyte according to the first aspect of the present invention.

The present invention has following beneficial effects: in the electrolyte of the present invention, the methylene methanedisulfonate or the methylene methanedisulfonate and the ethylene sulfate may significantly decrease the impedance of the SEI membrane, the lithium bis(fluorosulfonyl)imide may improve the stability and the conductivity of the electrolyte and also inhibit the formation of hydrofluoric acid, so as to prevent the non-aqueous organic solvent from being oxidized and decomposed by the hydrofluoric acid and also inhibit the dissolving-out of the metal ions in the positive active material. When the methylene methanedisulfonate or the methylene methanedisulfonate and the ethylene sulfate are used together with LiFSI, the lithium-ion battery may have advantages such as excellent low temperature performance, excellent rapid charging performance and long cycle life.

## DETAILED DESCRIPTION

Hereinafter an electrolyte and a lithium-ion battery according to the present invention are described in detail.

Firstly, an electrolyte according to a first aspect of the present invention is described. The electrolyte according to a first aspect of the present invention comprises a lithium salt, a non-aqueous organic solvent and an additive. The additive comprises methylene methanedisulfonate (MMDS) or the additive comprises methylene methanedisulfonate (MMDS) and ethylene sulfate (DTD), the lithium salt comprises lithium bis(fluorosulfonyl)imide (LiFSI). A content of the lithium bis(fluorosulfonyl)imide is 5%~15% of a total weight of the electrolyte.

In the electrolyte according to the first aspect of the present invention, the methylene methanedisulfonate or the methylene methanedisulfonate and the ethylene sulfate may significantly decrease the impedance of the SEI membrane, the lithium bis(fluorosulfonyl)imide may improve the stability and the conductivity of the electrolyte and also inhibit the formation of hydrofluoric acid, so as to prevent the non-aqueous organic solvent from being oxidized and decomposed by the hydrofluoric acid and also inhibit the dissolving-out of the metal ions in the positive active material. When the methylene methanedisulfonate or the methylene methanedisulfonate and the ethylene sulfate are used together with LiFSI, the lithium-ion battery may have advantages such as excellent low temperature performance, excellent rapid charging performance and long cycle life. When the content of LiFSI is less than 5%, the improvements on the stability and the conductivity of the electrolyte are not obvious, and the rapid charging performance and the cycle performance of the lithium-ion battery are both worse; when the content of LiFSI is more than 15%, the viscosity of the electrolyte is too large, the improvement on the dynamics performance of the lithium-ion battery is affected, moreover, LiFSI will be difficult to dissolve in the electrolyte as the non-aqueous organic solvent of the lithium-ion battery is gradually consumed, therefore LiFSI will crystallize from the electrolyte and deposit, and the performances of the lithium-ion battery are deteriorated.

In the electrolyte according to the first aspect of the present invention, when the electrolyte only comprises the methylene methanedisulfonate and does not comprise the ethylene sulfate, the content of the methylene methanedisulfonate may be 0.2%~3% of the total weight of the electrolyte; when the electrolyte comprises both the methylene methanedisulfonate and the ethylene sulfate, a total content of the methylene methanedisulfonate and the ethylene sulfate may be 0.2%~3% of the total weight of the electrolyte. When the content of the methylene methanedisulfonate or a total content of the methylene methanedisulfonate and the ethylene sulfate is less than 0.2%, a solid electrolyte interface (SEI) membrane formed on the interface of the negative electrode plate is not stable, therefore it cannot inhibit the side reactions from occurring during the charge-discharge processes, and cannot significantly improve the low temperature performance, the cycle performance and the rapid charging performance of the lithium-ion battery either; when the content of the methylene methanedisulfonate or a total content of the methylene methanedisulfonate and the ethylene sulfate is more than 3%, the SEI membrane formed on the interface of the negative electrode plate is too thick, lithium dendrite is easily formed during the charge-discharge processes of the lithium-ion battery and the capacity is easily dived, thereby affecting the cycle life of the lithium-ion battery.

In the electrolyte according to the first aspect of the present invention, the additive may further comprise a SEI-forming supplementary additive, the SEI-forming supplementary additive may be one or more selected from a group consisting of vinylene carbonate (VC), fluoroethylene carbonate (FEC), tris(trimethylsilyl) borate (TMSB), tris(trimethylsilyl) phosphate (TMSP), vinylethylene carbonate (VEC) and 1,3-propanesultone (PS). A content of the SEI-forming supplementary additive may be 0.2%~3% of the total weight of the electrolyte. The SEI-forming supplementary additive may further improve the components and the quality of the SEI membrane on the interface of the negative electrode plate, so as to further improve the low temperature performance, the cycle performance and the rapid charging performance of the lithium-ion battery. Too much content of SEI-forming supplementary additive will have a negative effect on the stability and the impedance of the SEI membrane on the surface of the negative electrode plate.

In the electrolyte according to the first aspect of the present invention, a type of the non-aqueous organic solvent is not specifically limited and may be selected based on actual demands. From the perspective of actual use and commercialization, the non-aqueous organic solvent may comprise one or more selected from a group consisting of cyclic carbonate ester and chain carbonate ester. Preferably, the non-aqueous organic solvent comprises a mixture of a cyclic carbonate ester and a chain carbonate ester, so that the conductivity and the viscosity of the electrolyte can be adjusted by changing the components of the non-aqueous organic solvent so as to better improve the low temperature performance, the cycle performance and the rapid charging performance of the lithium-ion battery. A type of the cyclic carbonate ester and the chain carbonate ester is not specifically limited and may be selected based on actual demands. Preferably, the cyclic carbonate ester may be one or more selected from a group consisting of ethylene carbonate, propylene carbonate, 1,2-butylene carbonate and 2,3-butylene carbonate, the chain carbonate ester may be one or more selected from a group consisting of dimethyl carbonate, diethyl carbonate, dipropyl carbonate, dibutyl carbonate, ethyl methyl carbonate, methyl propyl carbonate, methyl isopropyl carbonate, methyl butyl carbonate and ethyl propyl carbonate.

In the electrolyte according to the first aspect of the present invention, the non-aqueous organic solvent may further comprise a carboxylic acid ester so as to further improve the conductivity of the electrolyte, decrease the viscosity of the electrolyte, improve the infiltration ability between the electrolyte and the negative active material layer with a high pressing density and improve the dynamics performance of the lithium-ion battery. A type of the carboxylic acid ester is not specifically limited and may be selected based on actual demands. Preferably, the carboxylic acid ester may be one or more selected from a group consisting of methyl formate, ethyl formate, propyl formate, isopropyl formate, methyl propionate, ethyl propionate, propyl propionate, isopropyl propionate, methyl acetate, ethyl acetate, propyl acetate and isopropyl acetate. Preferably, a content of the carboxylic acid ester may be less than or equal to 30% of the total weight of the electrolyte. When the content of the carboxylic acid ester is too large, the high temperature stability of the electrolyte is worse and the high temperature operating life of the lithium-ion battery is deteriorated; moreover, because the carboxylic acid ester has a lower oxidation potential that the generally used cyclic carbonate ester and chain carbonate ester, therefore when the content of the carboxylic acid ester is too large, the amount of gas generated in the lithium-ion battery may increase.

In the electrolyte according to the first aspect of the present invention, the lithium bis(fluorosulfonyl)imide (LiFSI) used as a lithium salt may be used alone in the electrolyte or used together with other lithium salts. Preferably, the lithium salt may further comprise one or more selected from a group consisting of $LiPF_6$, $LiBF_4$, LiTFSI, $LiClO_4$, $LiAsF_6$, LiBOB and LiDFOB, the total content of these lithium salts is less than or equal to 15% of the total weight of the electrolyte.

Next a lithium-ion battery according to a second aspect of the present invention is described, the lithium-ion battery comprises a positive electrode plate, a negative electrode plate, a separator provided between the positive electrode plate and the negative electrode plate and the electrolyte according to the first aspect of the present invention.

In the lithium-ion battery according to the second aspect of the present invention, the positive electrode plate comprise a positive current collector and a positive active material layer. A type and content of the positive active material in the positive active material layer are not specifically limited and may be selected based on actual demands. Preferably, the positive active material may be one or more selected from a group consisting of lithium iron phosphate ($LiFePO_4$), lithium nickel cobalt manganese oxide (NCM), lithium nickel cobalt aluminum oxide (NCA), lithium cobalt oxide ($LiCoO_2$) and lithium manganese oxide (LMO). Because the lithium iron phosphate has a better safety performance and a lower charge-discharge potential plateau (about 3.2 V), the lithium-ion battery using the lithium iron phosphate has a lower limited charging voltage (generally is 3.6 V~3.8 V), and the probability of occurrence of the side reactions caused by the electrolyte under a higher limited charging voltage is decreased, therefore the positive active material preferably comprises the lithium iron phosphate ($LiFePO_4$).

In the lithium-ion battery according to the second aspect of the present invention, the negative electrode plate comprises a negative current collector and a negative active material layer. The negative active material in the negative active material layer is not limited to graphite. The negative active material in the negative active material layer may further comprise one or more selected from a group consisting of silicon, silicon oxide, silicon alloy, tin, tin oxide, tin alloy and lithium titanate. Moreover, the pressing density of the negative active material layer comprising graphite in the negative electrode plate may range from 1.4 $g/cm^3$ to 1.8 $g/cm^3$. The electrolyte according to the first aspect of the present invention may form a more dense and more stable SEI membrane on the surface of the negative active material of the negative electrode plate with a high pressing density than that the existing electrolyte, and the impedance of the SEI membrane is much lower, the infiltration ability between the electrolyte and the negative electrode plate is much better, therefore the electrolyte according to the first aspect of the present invention may make the lithium-ion battery comprising the negative electrode plate with a high pressing density have better low temperature performance, better cycle performance and better rapid charging performance.

In addition, preferably, the limited charging voltage of the lithium-ion battery according to the second aspect of the present invention may be not more than 3.8 V, further preferably, the limited charging voltage of the lithium-ion battery may be not more than 3.6 V. When under this condition, the electrolyte according to the first aspect of the present invention has a better quality of the SEI membrane and a lower probability of occurrence of the side reactions, therefore the low temperature performance, the cycle performance and the rapid charging performance of the lithium-ion battery are all better improved. But the present invention is not limited to this, the lithium-ion battery according to the second aspect of the present invention may also work under a limited charging voltage higher than 3.8 V.

Hereinafter the present invention will be described in detail in combination with examples. It should be noted that, the examples described in the present invention are only used for explaining the present invention, and are not intended to limit the present invention.

Lithium-ion batteries of reference examples 1-9, examples 10-15 according to the present invention and comparative examples 1-9 were all prepared in accordance with the following preparation method.

(1) Preparation of an electrolyte

In a glove box or a drying room, ethylene carbonate (EC), ethyl methyl carbonate (EMC) and diethyl carbonate (DEC) according to a mass ratio of 30:60:10 were mixed, then the compounds illustrated in table 1 were added and uniformly mixed to obtain the electrolyte. The content of each compound illustrated in table 1 was a weight percentage calculated based on the total weight of the electrolyte.

(2) Preparation of a positive electrode plate

$LiFePO_4$ (positive active material), PVDF (binder) and acetylene black (conductive agent) according to a mass ratio of 94:3:3 were mixed together, then N-methyl-2-pyrrolidone (NMP, solvent) was added until the mixed solution was homogeneous and transparent, then the mixed solution was uniformly stirred via a vacuum mixer to form a positive electrode slurry, then the positive electrode slurry was uniformly coated on an aluminum foil (positive current collector) with a thickness of 12 $\mu$m, drying was then performed under room temperature, then baking was performed at 120 °C for 1 h, which was followed by cold pressing (a pressing density was 2.1 g/cm$^3$) and plate cutting, finally the positive electrode plate was obtained.

(3) Preparation of a negative electrode plate

Graphite (negative active material), carboxymethylcellulose sodium (CMC, thickening agent), styrene-butadiene rubber emulsion (binder) according to a mass ratio of 96:2:2 were uniformly mixed with deionized water (solvent), then the mixed solution was uniformly stirred with a vacuum mixer to form a negative electrode slurry, then the negative electrode slurry was uniformly coated on a copper foil (negative current collector) with a thickness of 8 $\mu$m, drying was then performed under room temperature, then baking was performed at 120 °C for 1 h, which was followed by cold pressing (a pressing density was 1.4 g/cm$^3$) and plate cutting, finally the negative electrode plate was obtained.

(4) Preparation of a lithium-ion battery

The positive electrode plate, the negative electrode plate and a polypropylene separator were wound together and then coated with an aluminum-plastic film, then baking was performed to remove water, which was followed by injecting the prepared electrolyte, sealing, standby, heat and cold pressing, formation, clamping and capacity grading, finally a soft packaging lithium-ion battery was obtained.

Table 1 Parameters of the electrolytes of reference examples 1-9, examples 10-15 according to the present invention and comparative examples 1-9

| | | Lithium salt | | Additive | | Carboxylic acid ester |
|---|---|---|---|---|---|---|
| | | LiFSI | LiPF$_6$ | Additive A | Additive B | |
| | Example 1 | 12.5% | / | 0.2% DTD | / | / |
| | Example 2 | 12.5% | / | 1% DTD | / | / |
| | Example 3 | 12.5% | / | 3% DTD | / | / |
| | Example 4 | 5% | / | 1% DTD | / | / |
| | Example 5 | 15% | / | 1% DTD | / | / |
| | Example 6 | 5.0% | 7.5% | 1% DTD | / | / |
| | Example 7 | 12.5% | / | 1% DTD | 1% VC | / |
| | Example 8 | 12.5% | / | 1% DTD | 1% TMSB | / |
| | Example 9 | 12.5% | / | 1% DTD | 1% FEC | / |
| | Example 10 | 12.5% | / | 1% MMDS | / | / |
| | Example 11 | 12.5% | / | 1 % MMDS | 1% FEC | / |

(continued)

| | Lithium salt | | Additive | | Carboxylic acid ester |
|---|---|---|---|---|---|
| | LiFSI | LiPF$_6$ | Additive A | Additive B | |
| Example 12 | 12.5% | / | 1% MMDS | 1% FEC | 10% propyl propionate |
| Example 13 | 12.5% | / | 1% MMDS | 1% FEC | 10% ethyl acetate |
| Example 14 | 12.5% | / | 1% MMDS | 1% FEC | 30% ethyl acetate |
| Example 15 | 12.5% | / | 0.5% MMDS+0.5% DTD | / | / |
| Comparative example 1 | 5.0% | / | / | / | / |
| Comparative example 2 | 12.5% | / | / | / | / |
| Comparative example 3 | 15.0% | / | / | / | / |
| Comparative example 4 | / | 12.5% | / | / | / |
| Comparative example 5 | / | 12.5% | 1% DTD | / | / |
| Comparative example 6 | 12.5% | / | 4% DTD | / | / |
| Comparative example 7 | 3% | / | 1% DTD | / | / |
| Comparative example 8 | 18% | / | 1% DTD | / | / |
| Comparative example 9 | 12.5% | / | 1% VC | / | / |

Hereinafter test processes of the prepared lithium-ion batteries of reference examples 1-9, examples 10-15 according to the present invention and comparative examples 1-9 were described.

(1) Testing of low temperature performance of the lithium-ion battery

At 25 °C, the lithium-ion batteries of reference examples 1-9, examples 10-15 according to the present invention and comparative examples 1-9 were discharged to 2.0 V at a constant current of 1 C, then the lithium-ion batteries were charged to 3.6 V at a constant current of 1 C, then the lithium-ion batteries were charged to 0.05 C at a constant voltage of 3.6 V, the charge capacity was marked as $C_C$; then the furnace temperature was adjusted to -20 °C, then the lithium-ion batteries were discharged to 2.0 V at a constant current of 1 C, the discharge capacity was marked as $C_{DT}$. The ratio of the discharge capacity and the charge capacity was the discharge capacity retention rate.

$$-20 \text{ °C discharge capacity retention rate of the lithium-ion battery (\%)} = C_{DT}/C_C \times 100\%.$$

(2) Testing of cycle performance of the lithium-ion battery

At 25 °C, the lithium-ion batteries of reference examples 1-9, examples 10-15 according to the present invention and comparative examples 1-9 were discharged to 2.0 V at a constant current of 1 C before the cycle test. During the cycle test process, the lithium-ion batteries were charged to 3.6 V at a constant current of 1 C, then the lithium-ion batteries were charged to 0.05 C at a constant voltage of 3.6 V, then the lithium-ion batteries were discharged to 2.0 V at a constant current of 1 C. Then the above cycle process was repeated, the capacity retention rate after 1000 cycles (1 C/1 C) under 25 °C of the lithium-ion battery was calculated.

At 25 °C, the lithium-ion batteries of reference examples 1-9, examples 10-15 according to the present invention and comparative examples 1-9 were discharged to 2.0 V at a constant current of 1 C before the cycle test. During the cycle test process, the lithium-ion batteries were charged to 3.6 V at a constant current of 3 C, then the lithium-ion batteries were charged to 0.05 C at a constant voltage of 3.6 V, then the lithium-ion batteries were discharged to 2.0 V at a constant current of 3 C. Then the above cycle process was repeated, the capacity retention rate after 1000 cycles (3 C/3 C) under 25 °C of the lithium-ion battery was calculated.

At 25 °C, the lithium-ion batteries of reference examples 1-9, examples 10-15 according to the present invention and comparative examples 1-9 were discharged to 2.0 V at a constant current of 1 C before the cycle test. During the cycle test process, the temperature of the oven was raised to 60 °C, then the lithium-ion batteries were charged to 3.6 V at a constant current of 1C, then the lithium-ion batteries were charged to 0.05 C at a constant voltage of 3.6 V, then the lithium-ion batteries were discharged to 2.0 V at a constant current of 1 C. Then the above cycle process was repeated, the capacity retention rate after 500 cycles (1 C/1 C) under 60 °C of the lithium-ion battery was calculated.

$$\text{Capacity retention rate after N cycles of the lithium-ion battery (\%)} = (\text{the discharge capacity of } N^{th} \text{ cycle / the discharge capacity of the first cycle}) \times 100\%.$$

Table 2 Test results of reference examples 1-9, examples 10-15 according to the present invention and comparative examples 1-9

| | -20°C discharge capacity retention rate (%) | Capacity retention rate after N cycles (%) | | |
|---|---|---|---|---|
| | | 25°C, 1C/1C after 1000 cycles | 25°C, 3C/3C after 1000 cycles | 60°C, 1C/1C after 500 cycles |
| Example 1 | 78.2 | 78.4 | 75.4 | 65.5 |
| Example 2 | 67.3 | 86.8 | 88.5 | 82.4 |
| Example 3 | 63.5 | 82.4 | 86.7 | 84.9 |
| Example 4 | 58.3 | 63.3 | 57.3 | 64.3 |
| Example 5 | 65.4 | 85.6 | 87.2 | 80.8 |
| Example 6 | 64.2 | 84.1 | 86.8 | 81.2 |
| Example 7 | 64.5 | 87.4 | 90.4 | 85.6 |
| Example 8 | 68.4 | 88.4 | 89.3 | 82.1 |
| Example 9 | 65.8 | 88.2 | 90.8 | 84.3 |
| Example 10 | 68.4 | 87.4 | 88.9 | 81.5 |
| Example 11 | 66.9 | 89.3 | 91.4 | 83.4 |
| Example 12 | 67.2 | 89.8 | 91.9 | 82.4 |
| Example 13 | 67.8 | 90.4 | 92.5 | 81.9 |
| Example 14 | 68.5 | 91.6 | 94.5 | 80.1 |
| Example 15 | 69.5 | 87.9 | 90.3 | 82.7 |
| Comparative example 1 | 60.3 | 58.3 | 57.3 | 64.3 |
| Comparative example 2 | 79.3 | 67.5 | 73.2 | 67.7 |
| Comparative example 3 | 78.4 | 64.3 | 70.2 | 65.5 |
| Comparative example 4 | 70.3 | 63.3 | 66.7 | 53.1 |

(continued)

| | -20°C discharge capacity retention rate (%) | Capacity retention rate after N cycles (%) | | |
| --- | --- | --- | --- | --- |
| | | 25°C, 1C/1C after 1000 cycles | 25°C, 3C/3C after 1000 cycles | 60°C, 1C/1C after 500 cycles |
| Comparative example 5 | 63.6 | 83.1 | 80.3 | 75.4 |
| Comparative example 6 | 57.4 | 80.1 | 84.2 | 79.6 |
| Comparative example 7 | 50.2 | 60.3 | 51.5 | 59.6 |
| Comparative example 8 | 60.2 | 83.4 | 85.1 | 78.3 |
| Comparative example 9 | 58.7 | 84.5 | 86.5 | 83.6 |

In table 2, it could be seen from comparison among comparative examples 1-3, as the content of LiFSI increased, the cycle performance under fast charging, the room temperature cycle performance and the high temperature cycle performance of the lithium-ion battery were all improved, but when the content of LiFSI continued to increase, the viscosity of the electrolyte increased, the low temperature DCR of the lithium-ion battery increased, therefore the low temperature discharge capacity was deteriorated. The lithium salts LiFSI and $LiPF_6$ were respectively added into comparative example 2 and comparative example 4, when the content of the lithium salt LiFSI and the content of the lithium salt $LiPF_6$ were the same, the low temperature discharge capacity, the cycle performance under fast charging, the room temperature cycle performance and the high temperature cycle performance of the lithium-ion battery comprising LiFSI were all better than those of the lithium-ion battery comprising $LiPF_6$, this was because LiFSI had a higher conductivity and a higher stability. It could be seen from comparison between reference example 2 and comparative example 5, the low temperature discharge capacity, the cycle performance under fast charging, the room temperature cycle performance and the high temperature cycle performance of the lithium-ion battery comprising both LiFSI and DTD were all better than those of the lithium-ion battery comprising both $LiPF_6$ and DTD.

It could be seen from comparison among comparative example 9, reference example 2 and example 10, when LiFSI was used together with DTD or MMDS, the impedance of the SEI membrane was significantly decreased, therefore the lithium-ion battery had better low temperature performance, better cycle performance under fast charging, better room temperature cycle performance and better high temperature cycle performance at the same time. It could be seen from comparison among reference examples 7-9, VC, TMSB and FEC were respectively added into the electrolyte of reference example 2, the cycle performance under fast charging, the room temperature cycle performance and the high temperature cycle performance of the lithium-ion battery were further improved, this was because these SEI-forming supplementary additives might further modify the SEI membrane on the surface of the negative electrode plate, however, these SEI-forming supplementary additives would increase the impedance of the SEI membrane, therefore the low temperature performances of reference examples 7-9 were decreased to different extents. It could be seen from comparison among examples 12-14, when the carboxylic acid ester was further added into the electrolyte, the conductivity of the electrolyte was further improved, the viscosity of the electrolyte was further decreased, the infiltration between the electrolyte and the negative active material layer having a high pressing density was further improved, therefore the low temperature performance and the cycle performance under fast charging of the lithium-ion battery were further improved.

It could be seen from comparison among reference examples 1-3 and comparative example 6, as the content of DTD increased, the comprehensive performances of the lithium-ion battery were increased, however, when the content of DTD was beyond a certain range, the comprehensive performances of the lithium-ion battery was deteriorated instead. This was because too much content of DTD would increase the impedance of the SEI membrane, moreover, the extra DTD was not stable under high temperature and would decompose into acids, therefore the interface stability of the lithium-ion battery was deteriorated.

It could be seen from comparison among reference example 2, reference examples 4-5 and comparative examples 7-8, no matter the content of LiFSI was too low or too high, the performances of the lithium-ion battery were both deteriorated. When the content of LiFSI was too low, the room cycle performance of the lithium-ion battery was affected, the improvements on the stability and the conductivity of the electrolyte were not obvious, and the cycle performance under fast charging and the low temperature performance of the lithium-ion battery were all worse; when the content of LiFSI was too high, the viscosity of the electrolyte was increased and the DCR of the lithium-ion battery was deteriorated, therefore the low temperature performance, the cycle performance under fast charging, the room temperature cycle performance and the high temperature cycle performance were decreased to different extents. Therefore, the content of LiFSI generally was 5%~15% of the total weight of the electrolyte, so that the lithium-ion battery might have excellent low temperature performance, excellent cycle performance under fast charging, excellent room temperature cycle performance and excellent high temperature cycle performance at the same time.

Preparation methods of the lithium-ion batteries of examples 16-23 were similar to that of the lithium-ion batteries of reference examples 1-9 and examples 10-15 according to the present invention, the differences lied in the type of the positive active material and the pressing density of the negative active material layer comprising graphite, the details could be seen from table 3.

Table 3 Parameters of the lithium-ion batteries of examples 16-23

| | Positive active material | Pressing density of the negative active material layer (g/cm$^3$) | Components of the electrolyte | Range of charging-discharging voltage |
|---|---|---|---|---|
| Example 16 | NCM523 | 1.4 | The same as example 7 | 2.5 V~4.1 V |
| Example 17 | NCM523 | 1.4 | The same as example 14 | 2.5 V~4.1 V |
| Example 18 | NCM523 | 1.8 | The same as example 7 | 2.5 V~4.1 V |
| Example 19 | NCM523 | 1.8 | The same as example 14 | 2.5 V-4.1 V |
| Example 20 | LiFePO$_4$ | 1.6 | The same as example 7 | 2 V~3.6 V |
| Example 21 | LiFePO$_4$ | 1.6 | The same as example 14 | 2 V~3.6 V |
| Example 22 | LiFePO$_4$ | 1.8 | The same as example 7 | 2 V~3.6 V |
| Example 23 | LiFePO$_4$ | 1.8 | The same as example 14 | 2 V~3.6 V |

wherein example 7 is a reference example and example 14 is example according to the present invention, and wherein examples 16, 18, 20 and 22 are reference examples, and examples 17, 19, 21 and 23 are examples according to the present invention.

Testing processes of examples 16-23 were the same as those of reference examples 1-9 and examples 10-15 according to the present invention, the difference lied in the range of the charging-discharging voltage of the lithium-ion batteries, the details could be seen from table 3 and table 4.

Table 4 Test results of examples 16-23

| | -20 °C discharge capacity retention rate (%) | Capacity retention rate after N cycles (%) | | |
|---|---|---|---|---|
| | | 25 °C, 1C/1C for 1000 cycles | 25 °C, 3C/3C for 1000 cycles | 60 °C, 1C/1C for 500 cycles |
| Example 16 | 72.3 | 84.7 | 85.8 | 83.5 |
| Example 17 | 78.4 | 86.7 | 87.6 | 76.4 |
| Example 18 | 68.5 | 81.7 | 83.3 | 80.6 |
| Example 19 | 76.7 | 85.1 | 86.9 | 72.1 |

(continued)

| | -20 °C discharge capacity retention rate (%) | Capacity retention rate after N cycles (%) | | |
|---|---|---|---|---|
| | | 25 °C, 1C/1C for 1000 cycles | 25 °C, 3C/3C for 1000 cycles | 60 °C, 1C/1C for 500 cycles |
| Example 20 | 64.7 | 87.9 | 89.6 | 84.8 |
| Example 21 | 67.9 | 90.8 | 94.1 | 80.3 |
| Example 22 | 62.7 | 85.9 | 87.2 | 83.2 |
| Example 23 | 67.3 | 90.2 | 93.6 | 79.4 |

It could be seen from table 4, when the types of the positive active materials were different, the improving effects of the electrolyte of the present invention on the lithium-ion batteries were different. Because the lithium iron phosphate had a better safety performance and a lower limited charging voltage (generally was 3.6 V~3.8 V), the lithium-ion battery using the lithium iron phosphate as the positive active material had better cycle performance under fast charging, better room temperature cycle performance and better high temperature cycle performance than that of the lithium-ion battery using the lithium cobalt nickel manganese oxide (the limited charging voltage was higher and generally was 4.1 V~4.3 V) as the positive active material.

It could be further seen from table 4, when the pressing densities of the negative active material layers were different, the improving effects of the electrolyte of the present invention on the lithium-ion batteries were different. The electrolyte of the present invention could form a more dense and more stable SEI membrane on the surface of the negative electrode plate having a high pressing density than the traditional electrolyte, and the impedance of the SEI membrane was smaller, the infiltration between the electrolyte and the negative electrode plate was better, therefore the lithium-ion battery had better low temperature performance, better cycle performance under fast charging, better room temperature cycle performance and better high temperature cycle performance.

Although preferred embodiments of the present invention are disclosed, they are not intended to limit the claims, any person skilled in the art may make some possible variations and modifications without departing from the concept of the present invention, therefore, the protection scope of the present application should be determined by the scope defined in the claims of the present invention.

## Claims

1. An electrolyte comprising a lithium salt, a non-aqueous organic solvent and an additive, the lithium salt comprises lithium bis(fluorosulfonyl)imide, a content of the lithium bis(fluorosulfonyl)imide is 5%~15% of a total weight of the electrolyte;

   **characterized in that**
   the additive comprises methylene methanedisulfonate or the additive comprises two of methylene methanedisulfonate and ethylene sulfate.

2. The electrolyte according to Claim 1, wherein

   a content of the methylene methanedisulfonate is 0.2%~3% of the total weight of the electrolyte, or
   a total content of the methylene methanedisulfonate and the ethylene sulfate is 0.2%~3% of the total weight of the electrolyte.

3. The electrolyte according to Claim 1, wherein

   the additive further comprises a SEI-forming supplementary additive,
   the SEI-forming supplementary additive is one or more selected from a group consisting of vinylene carbonate, fluoroethylene carbonate, tris(trimethylsilyl) borate, tris(trimethylsilyl) phosphate, vinylethylene carbonate and 1,3-propanesultone.

4. The electrolyte according to Claim 3, wherein a content of the SEI-forming supplementary additive is 0.2%~3% of the total weight of the electrolyte.

5. The electrolyte according to Claim 1 or 3, wherein the non-aqueous organic solvent comprises a mixture of a cyclic carbonate ester and a chain carbonate ester.

6. The electrolyte according to Claim 5, wherein

the cyclic carbonate ester is one or more selected from a group consisting of ethylene carbonate, propylene carbonate, 1,2-butylene carbonate and 2,3-butylene carbonate;
the chain carbonate ester is one or more selected from a group consisting of dimethyl carbonate, diethyl carbonate, dipropyl carbonate, dibutyl carbonate, ethyl methyl carbonate, methyl propyl carbonate, methyl isopropyl carbonate, methyl butyl carbonate and ethyl propyl carbonate.

7. The electrolyte according to Claim 5, wherein

the non-aqueous organic solvent further comprises a carboxylic acid ester,
the carboxylic acid ester is one or more selected from a group consisting of methyl formate, ethyl formate, propyl formate, isopropyl formate, methyl propionate, ethyl propionate, propyl propionate, isopropyl propionate, methyl acetate, ethyl acetate, propyl acetate and isopropyl acetate,
a content of the carboxylic acid ester is smaller than or equal to 30% of the total weight of the electrolyte.

8. A lithium-ion battery comprising a positive electrode plate, a negative electrode plate, a separator provided between the positive electrode plate and the negative electrode plate and an electrolyte, wherein the electrolyte is the electrolyte according to any one of Claims 1-7.

9. The lithium-ion battery according to Claim 8, wherein the negative electrode plate comprise a negative active material layer comprising graphite, a pressing density of the negative active material layer comprising graphite in the negative electrode plate is 1.4 g/cm$^3$ ~ 1.8 g/cm$^3$.

**Patentansprüche**

1. Elektrolyt, welcher ein Lithiumsalz, ein nicht-wässriges organisches Lösungsmittel und ein Additiv umfasst, wobei das Lithiumsalz Lithiumbis(fluorosulfonyl)imid umfasst, wobei ein Gehalt des Lithiumbis(fluorosulfonyl)imids 5%~15% eines Gesamtgewichts des Elektrolyten ist;

   **dadurch gekennzeichnet, dass**
   das Additiv Methylenmethandisulfonat umfasst, oder das Additiv zwei von Methylenmethandisulfonat und Ethylensulfat umfasst.

2. Elektrolyt nach Anspruch 1, wobei

   ein Gehalt des Methylenmethandisulfonats 0.2%~3% des Gesamtgewichts des Elektrolyten ist, oder
   ein Gesamtgehalt des Methylenmethandisulfonats und des Ethylensulfats 0.2%~3% des Gesamtgewichts des Elektrolyten ist.

3. Elektrolyt nach Anspruch 1, wobei

   das Additiv zudem ein zusätzliches, SEI-bildendes Additiv umfasst,
   das zusätzliche, SEI-bildende Additiv eines oder mehrere ist, welche ausgewählt sind aus einer Gruppe bestehend aus Vinylencarbonat, Fluorethylencarbonat, Tris(trimethylsilyl)borat, Tris(trimethylsilyl)phosphat, Vinylethylencarbonat und 1,3-Propansulton.

4. Elektrolyt nach Anspruch 3, wobei ein Gehalt des zusätzlichen, SEIbildenden Additivs 0.2%~3% des Gesamtgewichts des Elektrolyten ist.

5. Elektrolyt nach Anspruch 1 oder 3, wobei das nicht-wässrige organische Lösungsmittel eine Mischung eines zyklischen Carbonat-Esters und eines Ketten-Carbonat-Esters umfasst.

6. Elektrolyt nach Anspruch 5, wobei

der zyklische Carbonat-Ester einer oder mehrere ist, welche ausgewählt sind aus einer Gruppe bestehend aus Ethylencarbonat, Propylencarbonat, 1,2-Butylencarbonat und 2,3-Butylencarbonat;
der Ketten-Carbonat-Ester einer oder mehrere ist, welche ausgewählt sind aus einer Gruppe bestehend aus Dimethylcarbonat, Diethylcarbonat, Dipropylcarbonat, Dibutylcarbonat, Ethylmethylcarbonat, Methylpropylcarbonat, Methylisopropylcarbonat, Methylbutylcarbonat und Ethylpropylcarbonat.

7. Elektrolyt nach Anspruch 5, wobei

das nicht-wässrige organische Lösungsmittel zudem einen Carbonsäureester umfasst,
der Carbonsäureester einer oder mehrere ist, welche ausgewählt sind aus einer Gruppe bestehend aus Methylformiat, Ethylformiat, Propylformiat, Isopropylformiat, Methylpropionat, Ethylpropionat, Propylpropionat, Isopropylpropionat, Methylacetat, Ethylacetat, Propylacetat und Isopropylacetat,
ein Gehalt des Carbonsäureesters kleiner als oder gleich 30% des Gesamtgewichts des Elektrolyten ist.

8. Lithiumionenbatterie, welche eine positive Elektrodenplatte, eine negative Elektrodenplatte, einen zwischen der positiven Elektrodenplatte und der negativen Elektrodenplatte bereitgestellte Separator und einen Elektrolyt umfasst, wobei der Elektrolyt der Elektrolyt nach einem der Ansprüche 1 bis 7 ist.

9. Lithiumionenbatterie nach Anspruch 8, wobei die negative Elektrodenplatte eine Graphit umfassende Negativ-Aktivmaterial-Schicht umfasst, wobei eine Pressdichte der Graphit umfassenden Negativ-Aktivmaterial-Schicht in der negativen Elektrodenplatte 1,4 g/cm$^3$ ~ 1,8 g/cm$^3$ beträgt.

**Revendications**

1. Electrolyte comprenant un sel de lithium, un solvant organique non aqueux et un additif, le sel de lithium comprend du lithium bis(fluorosulfonyl)imide, une teneur en lithium bis(fluorosulfonyl)imide est de 5 % à environ 15 % d'un poids total de l'électrolyte ;
**caractérisé en ce que**
l'additif comprend du méthane disulfonate de méthylène ou l'additif comprend deux composés parmi le méthane disulfonate de méthylène et le sulfate d'éthylène.

2. Electrolyte selon la revendication 1, dans lequel
une teneur en méthane disulfonate de méthylène est de 0,2 % à environ 3 % du poids total de l'électrolyte, ou
une teneur totale en méthane disulfonate de méthylène et sulfate d'éthylène est de 0,2 % à environ 3 % du poids total de l'électrolyte.

3. Electrolyte selon la revendication 1, dans lequel
l'additif comprend en outre un additif supplémentaire formant un SEI,
l'additif supplémentaire formant un SEI est un ou plusieurs composés choisis dans un groupe constitué de carbonate de vinylène, de carbonate de fluoro éthylène, de borate de tris(triméthylsilyle), de phosphate de tris(triméthylsilyle), de carbonate de vinyl éthylène et de 1,3-propane sultone.

4. Electrolyte selon la revendication 3, dans lequel une teneur en additif supplémentaire formant un SEI est de 0,2 % à environ 3 % du poids total de l'électrolyte.

5. Electrolyte selon la revendication 1 ou la revendication 3, dans lequel le solvant organique non aqueux comprend un mélange d'un ester carbonate cyclique et d'un ester carbonate en chaîne.

6. Electrolyte selon la revendication 5, dans lequel
l'ester carbonate cyclique est un ou plusieurs composés choisis dans un groupe constitué de carbonate d'éthylène, de carbonate de propylène, de carbonate de 1,2-butylène et de carbonate de 2,3-butylène ;
l'ester carbonate en chaîne est un ou plusieurs composés choisis dans un groupe constitué de carbonate de diméthyle, de carbonate de diéthyle, de carbonate de dipropyle, de carbonate de dibutyle, de carbonate d'éthyl méthyle, de carbonate de méthyl propyle, de carbonate de méthyl isopropyle, de carbonate de méthyl butyle et de carbonate d'éthyl propyle.

7. Electrolyte selon la revendication 5, dans lequel
le solvant organique non aqueux comprend en outre un ester d'acide carboxylique,
l'ester d'acide carboxylique est un ou plusieurs composés choisis dans un groupe constitué du formate de méthyle, du formate d'éthyle, du formate de propyle, du formate d'isopropyle, du propionate de méthyle, du propionate d'éthyle, du propionate de propyle, du propionate d'isopropyle, de l'acétate de méthyle, de l'acétate d'éthyle, de l'acétate de propyle et de l'acétate d'isopropyle,
une teneur de l"ester d'acide carboxylique est inférieure ou égale à 30 % du poids total de l'électrolyte.

8. Batterie au lithium-ion comprenant une plaque d'électrode positive, une plaque d'électrode négative, un séparateur mis en place entre la plaque d'électrode positive et la plaque d'électrode négative, et un électrolyte, où l'électrolyte est l'électrolyte selon l'une quelconque des revendications 1 à 7.

9. Batterie au lithium-ion selon la revendication 8, dans laquelle la plaque d'électrode négative comprend une couche de matière active négative comprenant du graphite, une densité de compression de la couche de matière active négative comprenant du graphite dans la plaque d'électrode négative est de 1,4 $g/cm^3$ à environ 1,8 $g/cm^3$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710485995
- KR 20170061030 A